# EUROPEAN PATENT APPLICATION

(11) **EP 2 837 908 A1**
(43) Date of publication of application: **18.02.2015**
(21) Application number: 14180643.0
(22) Date of filing: 12.08.2014
(51) Int. Cl.: G01B 21/06, B65H 16/02, G01B 7/02

(54) **Method and system for controlling a feeding length of a wire**

(30) Priority: 12.08.2013 CN 201310349287
(71) Applicant: Tyco Electronics Corporation, Berwyn, PA 19312 (US); Shenzhen Shengli Jingji Tech Co., Ltd., Shenzhen City (CN)
(72) Inventor: Lu, Roberto Francisco-Yi, Bellevue, WA Washington 98006 (US); Zeng, Qinglong, Shenzhen (CN)
(74) Representative: Grünecker, Kinkeldey, Stockmair & Schwanhäusser

(57) **Abstract**

A method for controlling a feeding length of a wire is provided. The wire is frictionally engaged with and fed by a driving wheel mounted on a driver. The method comprises steps of: providing a displacement sensing device comprising a driven wheel and a sensor for sensing the number of revolutions of the driven wheel, the driven wheel being frictionally engaged with the wire and configured to be rotated under a frictional engaging force therebetween as the wire is fed; starting the driver to rotate the driving wheel, so that the wire is fed forward and the driven wheel is rotated as the wire is fed; calculating an actual feeding length of the wire based on a product of the number of revolutions of the driven wheel sensed by the sensor and a perimeter of the driven wheel; and controlling the feeding length of the wire based on an error between a predetermined feeding length of the wire and the calculated actual feeding length of the wire with closed loop feedback control until the error becomes zero or within an allowable range.

## Description

### CROSS-REFERENCE TO RELATED APPLICATION

This application claims the benefit of Chinese Patent Application No. 201310349287.4 filed on August 12, 2013 in the State Intellectual Property Office of China, the whole disclosure of which is incorporated herein by reference.

### BACKGROUND OF THE INVENTION

### Field of the Invention

The present invention relates to a method for controlling a feeding length of a wire, more particularly, relates to a method for controlling a feeding length of a solder wire and a detecting system for performing the method.

### Description of the Related Art

In the prior art, a solder wire is generally fed forward under a frictional engaging force between the solder wire and a driving wheel connected to an electric motor. The feeding length of the wire is often controlled with an open loop control. For example, the number of revolutions of the electric motor is firstly calculated according to a predetermined feeding length of the wire, then the electric motor is started to rotate the driving wheel to feed the wire. When the electric motor runs to the calculated number of revolutions, the electric motor is stopped, and the feeding operation of the wire is finished. Theoretically, since the calculated number of revolutions of the electric motor corresponds to the predetermined feeding length of the wire, the actual feeding length of the wire would be equal to the predetermined feeding length of the wire. However, in practice, many unexpected conditions may occur, for example, the driving wheel is slipping over the wire or the electric motor is idling. It may cause the actual feeding length of the wire inaccurate and not equal to the predetermined feeding length.

### SUMMARY OF THE INVENTION

The present invention has been made to overcome or alleviate at least one aspect of the above mentioned disadvantages.

Accordingly, it is an object of the present invention to provide a method for accurately controlling a feeding length of a wire.

Accordingly, it is another object of the present invention to provide a simple displacement sensing system capable of accurately sensing an actual feeding length of a wire.

According to an aspect of the present invention, there is provided a method for controlling a feeding length of a wire, wherein the wire is frictionally engaged with and fed by a driving wheel mounted on a driver, and the method comprises steps of:
providing a displacement sensing device comprising a driven wheel and a sensor for sensing the number of revolutions of the driven wheel, wherein the driven wheel is frictionally engaged with the wire and is configured to be rotated under a frictional engaging force therebetween as the wire is fed;
starting the driver to rotate the driving wheel, so that the wire is fed forward and the driven wheel is rotated as the wire is fed;
calculating an actual feeding length of the wire based on a product of the number of revolutions of the driven wheel sensed by the sensor and a perimeter of the driven wheel; and
controlling the feeding length of the wire based on an error between a predetermined feeding length of the wire and the calculated actual feeding length of the wire with closed loop feedback control until the error becomes zero or within an allowable range.

According to another aspect of the present invention, there is provided a method for controlling a feeding length of a wire, wherein the wire is frictionally engaged with and fed by a driving wheel mounted on a driver, and the method comprises steps of:
providing a displacement sensing device comprising a driven wheel and a sensor for sensing the number of revolutions of the driven wheel, wherein the driven wheel is frictionally engaged with the wire and configured to be rotated under a frictional engaging force therebetween as the wire is fed;
setting a predetermined driving amount for the driver according to a predetermined feeding length of the wire;
starting the driver to rotate the driving wheel, so that the wire is fed forward and the driven wheel is rotated as the wire is fed;
stopping the driver when the driver runs to the predetermined driving amount, and calculating an actual feeding length of the wire based on a product of the number of revolutions of the driven wheel sensed by the sensor and a perimeter of the driven wheel; and
determining whether an error between the predetermined feeding length of the wire and the calculated actual feeding length of the wire is equal to zero or within an allowable range, if not, starting the driver again and controlling a driving amount of the driver based on the error with closed loop feedback control until the error becomes zero or within the allowable range.

According to an exemplary embodiment of the present invention, the wire comprises a solder wire.

According to another exemplary embodiment of the present invention, the allowable range is between 0 to 0.1mm.

According to another exemplary embodiment of the present invention, the allowable range is between 0 to 0.05mm.

According to another exemplary embodiment of the present invention, the allowable range is between 0 to 0.01mm.

According to another exemplary embodiment of the present invention, the driver comprises an electric motor, and the driving wheel is coaxially mounted on an output shaft of the electric motor.

According to another exemplary embodiment of the present invention, the sensor comprises a rotary type optical encoder or a rotary type electrical encoder, and the driven wheel is coaxially mounted on an input shaft of the encoder.

According to another exemplary embodiment of the present invention, an axis of the output shaft of the electric motor is arranged to be parallel to an axis of the input shaft of the encoder; and an axis of the wire is arranged to be perpendicular to the axes of the output shaft of the electric motor and the input shaft of the encoder.

According to another exemplary embodiment of the present invention, the driver and the sensor are fixedly mounted on a vertical side wall of an installation frame.

According to another exemplary embodiment of the present invention, an inlet tube and an outlet tube are mounted at a front end and a rear end of the installation frame, respectively; a groove member is mounted on the installation frame between the inlet tube and the outlet tube; and the wire passes through the inlet tube, a groove formed in the groove member and the outlet tube as the wire is fed.

According to another exemplary embodiment of the present invention, at least a part of outer circumference surface of the wire emerges from both ends of the groove of the groove member; and outer circumference surfaces of the driving wheel and the driven wheel press against the emerged outer circumference surface of the wire so as to frictionally engage the wire.

According to another aspect of the present invention, there is provided a displacement sensing system, comprising:
a displacement sensing device comprising a driven wheel and a sensor for sensing the number of revolutions of the driven wheel, wherein the driven wheel frictionally engaged with the wire and configured to be rotated under a frictional engaging force therebetween as the wire is fed; and
a controller for calculating an actual feeding length of the wire based on a product of the number of revolutions of the driven wheel sensed by the sensor and a perimeter of the driven wheel.

According to an exemplary embodiment of the present invention, the sensor comprises a rotary type optical encoder or a rotary type electrical encoder, and the driven wheel is coaxially mounted on an input shaft of the encoder.

According to another aspect of the present invention, there is provided a method for controlling a feeding length of a wire, comprising:
sensing an actual feeding length of the wire; and
controlling the feeding length of the wire based on an error between a predetermined feeding length of the wire and the sensed actual feeding length of the wire with closed loop feedback control until the error becomes zero or within an allowable range.

In the above various exemplary embodiments of the present invention, the feeding length of the wire is controlled with closed loop feedback control, therefore, the wire is accurately fed in the length. Furthermore, the displacement sensing system is very simple and can accurately sense the actual feeding length of the wire.

### BRIEF DESCRIPTION OF THE DRAWINGS

The above and other features of the present invention will become more apparent by describing in detail exemplary embodiments thereof with reference to the accompanying drawings, in which:

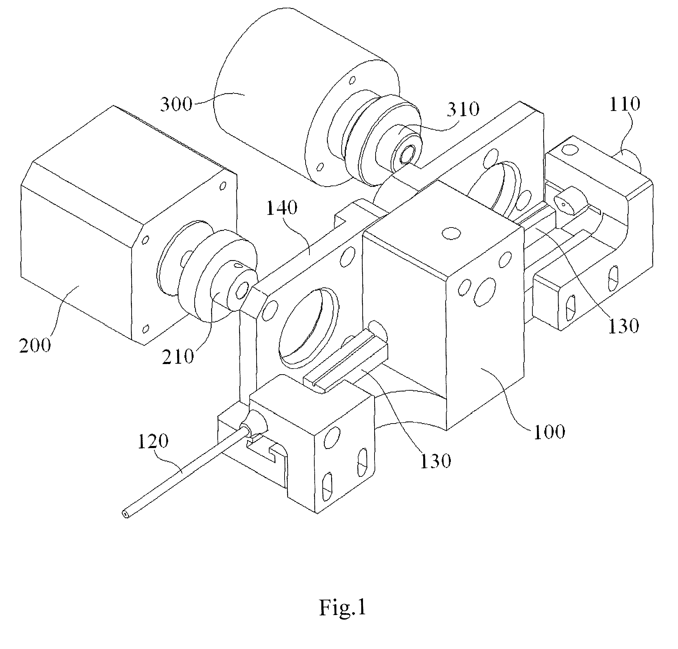

Fig.1 is an illustrative perspective view of a wire feeding system according to an exemplary embodiment of the present invention.

### DETAILED DESCRIPTION OF PREFERRED EMBODIMENTS OF THE IVENTION

Exemplary embodiments of the present disclosure will be described hereinafter in detail with reference to the attached drawings, wherein the like reference numerals refer to the like elements. The present disclosure may, however, be embodied in many different forms and should not be construed as being limited to the embodiment set forth herein; rather, these embodiments are provided so that the present disclosure will be thorough and complete, and will fully convey the concept of the disclosure to those skilled in the art.

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

According to a general concept of the present invention, there is provided a method for controlling a feeding length of a wire, the wire is frictionally engaged with and fed by a driving wheel mounted on a driver, the method comprising: providing a displacement sensing device comprising a driven wheel and a sensor for sensing the number of revolutions of the driven wheel, the driven wheel frictionally engaged with the wire and configured to be rotated under a frictional engaging force therebetween as the wire is fed; starting the driver to rotate the driving wheel, so that the wire is fed forward and the driven wheel is rotated as the wire is fed; calculating an actual feeding length of the wire based on a product of the number of revolutions of the driven wheel sensed by the sensor and a perimeter of the driven wheel; and controlling the feeding length of the wire based on an error between a predetermined feeding length of the wire and the calculated actual feeding length of the wire with closed loop feedback control until the error becomes zero or within an allowable range.

Fig.1 is an illustrative perspective view of a wire feeding system according to an exemplary embodiment of the present invention.

As shown in Fig.1, in an exemplary embodiment of the present invention, the wire feeding system mainly comprises a wire guiding mechanism 110, 120, 130 for guiding a wire (not shown) to move forward in a straight line, a driving mechanism 200, 210 for driving the wire to move forward, a displacement sensing device 300, 310 for sensing an actual feeding length of the wire, an installation frame 100 for fixing various members thereon, and a controller (not shown) for controlling the operation of the entire system.

In the illustrated embodiment of Fig.1, the wire guiding mechanism mainly comprises an inlet tube 110, an outlet tube 120 and a groove member 130. The inlet tube 110 and the outlet tube 120 are mounted at a front end and a rear end of the installation frame 100, respectively. The groove member 130 is mounted on the installation frame 100 between the inlet tube 110 and the outlet tube 120. With the above configuration, the wire may pass through the inlet tube 110, a groove formed in the groove member 130 and the outlet tube 120 as the wire is fed.

Referring to Fig.1 again, in an exemplary embodiment of the present invention, the driving mechanism mainly comprises a driver 200 and a driving wheel 210. The driving wheel 210 is frictionally engaged with the wire. As a result, the wire can be fed forward under the frictional engaging force between the wire and the driving wheel 210. The driving wheel 210 is connected to the driver 200. The driver 200 rotates the driving wheel 210 so as to feed the wire.

As shown in Fig.1, in an exemplary embodiment of the present invention, the displacement sensing device mainly comprises a driven wheel 310 and a sensor 300 for sensing the number of revolutions of the driven wheel 310. The driven wheel 310 is frictionally engaged with the wire and is configured to be rotated under the frictional engaging force therebetween while feeding the wire. The sensor 300 senses the number of revolutions of the driven wheel 310, converts the number of revolutions of the driven wheel 310 into an electrical signal, and transmits the electrical signal to the controller. Thereby, the controller can calculate the actual feeding length of the wire based on a product of the number of revolutions of the driven wheel 310 sensed by the sensor 300 and a perimeter of the driven wheel 310.

As shown in Fig.1, the driver 200 and the sensor 300 are fixedly mounted on a vertical side wall 140 of the installation frame 100.

In an exemplary embodiment, as shown in Fig.1, at least a part of the outer circumference surface of the wire emerges from both ends of the groove of the groove member 130, such that outer circumference surfaces of the driving wheel 210 and the driven wheel 310 may press against the emerged outer circumference surface of the wire and frictionally engage the wire.

As shown in Fig.1, in an exemplary embodiment of the present invention, the driver 200 comprises an electric motor, and the driving wheel 210 is coaxially mounted on an output shaft of the electric motor.

As shown in Fig.1, in an exemplary embodiment of the present invention, the sensor 300 comprises a rotary type optical encoder or a rotary type electrical encoder, and the driven wheel 310 is coaxially mounted on an input shaft of the encoder.

In the illustrated embodiment of Fig.1, an axis of the output shaft of the electric motor 200 is arranged to be parallel to an axis of the input shaft of the encoder 300; and an axis of the wire is arranged to be perpendicular to the axes of the output shaft of the electric motor 200 and the input shaft of the encoder 300.

In an exemplary embodiment of the present invention, the controller may comprise Programmable Logic Controller, Industrial Computer or Personal Computer.

Hereafter, it will describe in detail the method for controlling the feeding length of the wire.

In an exemplary embodiment of the present invention, there is provided a method for controlling a feeding length of a wire. The wire is frictionally engaged with and fed by a driving wheel 210 mounted on a driver 200, and the method comprises steps of:
S10: providing a displacement sensing device comprising a driven wheel 310 and a sensor 300 for sensing the number of revolutions of the driven wheel 310, the driven wheel 310 being frictionally engaged with the wire and configured to be rotated under a friction engaging force therebetween as the wire is fed;
S20: starting the driver 200 to rotate the driving wheel 210, so that the wire is fed forward and the driven wheel 310 is rotated as the wire is fed;
S30: calculating an actual feeding length of the wire based on a product of the number of revolutions of the driven wheel 310 sensed by the sensor 300 and a perimeter of the driven wheel 310; and
S40: controlling the feeding length of the wire based on an error between a predetermined feeding length of the wire and the calculated actual feeding length of the wire with closed loop feedback control until the error becomes zero or within an allowable range.

In an exemplary embodiment of the present invention, the allowable range may be a range of 0 to 0.1mm, preferably, a range of 0 to 0.05mm, more preferably, a range of 0 to 0.01mm.

In another exemplary embodiment of the present invention, there is provided a method for controlling a feeding length of a wire. The wire is frictionally engaged with and fed by a driving wheel 210 mounted on a driver 200, the method comprises steps of:
S100: providing a displacement sensing device comprising a driven wheel 310 and a sensor 300 for sensing the number of revolutions of the driven wheel 310, the driven wheel 310 being frictionally engaged with the wire and configured to be rotated under a frictional engaging force therebetween as the wire is fed;
S200: setting a predetermined driving amount (for example, a predetermined number of revolutions of the electric motor 200) for the driver 200 according to a predetermined feeding length of the wire;
S300: starting the driver 200 to rotate the driving wheel 210, so that the wire is fed forward and the driven wheel 310 is rotated as the wire is fed;
S400: stopping the driver 200 when the driver 200 runs to the predetermined driving amount, and calculating an actual feeding length of the wire based on a product of the number of revolutions of the driven wheel 310 sensed by the sensor 300 and a perimeter of the driven wheel 310; and
S500: determining whether an error between the predetermined feeding length of the wire and the calculated actual feeding length of the wire is equal to zero or within an allowable range, if not, starting the driver 200 again and controlling a driving amount of the driver 200 based on the error with closed loop feedback control until the error becomes zero or within the allowable range.

In another exemplary embodiment of the present invention, there is provided a method for controlling a feeding length of a wire, comprising: sensing an actual feeding length of the wire; and controlling the feeding length of the wire based on an error between a predetermined feeding length of the wire and the sensed actual feeding length of the wire with closed loop feedback control until the error becomes zero or within a allowable range.

In an exemplary embodiment of the present invention, the wire may comprise solder wire, such as metal solder wire or alloy solder wire, for example, tin solder, tin brass solder wire or aluminum brazing wire.

It should be appreciated for those skilled in this art that the above embodiments are intended to be illustrated, and not restrictive. For example, many modifications may be made to the above embodiments by those skilled in this art, and various features described in different embodiments may be freely combined with each other without conflicting in configuration or principle.

Although several exemplary embodiments have been shown and described, it would be appreciated by those skilled in the art that various changes or modifications may be made in these embodiments without departing from the principles and spirit of the disclosure, the scope of which is defined in the claims and their equivalents.

As used herein, an element recited in the singular and proceeded with the word "a" or "an" should be understood as not excluding plural of said elements or steps, unless such exclusion is explicitly stated. Furthermore, references to "one embodiment" of the present invention are not intended to be interpreted as excluding the existence of additional embodiments that also incorporate the recited features. Moreover, unless explicitly stated to the contrary, embodiments "comprising" or "having" an element or a plurality of elements having a particular property may include additional such elements not having that property.

## Claims

1. A method for controlling a feeding length of a wire, the wire is frictionally engaged with and fed by a driving wheel (210) mounted on a driver (200), the method comprising steps of:
providing a displacement sensing device comprising a driven wheel (310) and a sensor (300) for sensing the number of revolutions of the driven wheel (310), the driven wheel (310) being frictionally engaged with the wire and configured to be rotated under a frictional engaging force therebetween as the wire is fed;
starting the driver (200) to rotate the driving wheel (210), so that the wire is fed forward and the driven wheel (310) is rotated as the wire is fed;
calculating an actual feeding length of the wire based on a product of the number of revolutions of the driven wheel (310) sensed by the sensor (300) and a perimeter of the driven wheel (310); and
controlling the feeding length of the wire based on an error between a predetermined feeding length of the wire and the calculated actual feeding length of the wire with closed loop feedback control until the error becomes zero or within an allowable range.

2. A method for controlling a feeding length of a wire, the wire is frictionally engaged with and fed by a driving wheel (210) mounted on a driver (200), the method comprising:
providing a displacement sensing device comprising a driven wheel (310) and a sensor (300) for sensing the number of revolutions of the driven wheel (310), the driven wheel (310) being frictionally engaged with the wire and configured to be rotated under a frictional engaging force therebetween as the wire is fed;
setting a predetermined driving amount for the driver (200) according to a predetermined feeding length of the wire;
starting the driver (200) to rotate the driving wheel (210), so that the wire is fed forward and the driven wheel (310) is rotated as the wire is fed;
stopping the driver (200) when the driver (200) runs to the predetermined driving amount, and calculating an actual feeding length of the wire based on a product of the number of revolutions of the driven wheel (310) sensed by the sensor (300) and a perimeter of the driven wheel (310); and
determining whether an error between the predetermined feeding length of the wire and the calculated actual feeding length of the wire is equal to zero or within an allowable range, if not, starting the driver (200) again and controlling a driving amount of the driver (200) based on the error with closed loop feedback control until the error becomes zero or within the allowable range.

3. The method according to claim 1 or 2, wherein the wire comprises a solder wire.

4. The method according to claim 3, wherein the allowable range is between 0 to 0.1mm.

5. The method according to claim 4, wherein the allowable range is between 0 to 0.05mm.

6. The method according to claim 5, wherein the allowable range is between 0 to 0.01mm.

7. The method according to claim 3, wherein
the driver (200) comprises an electric motor, and
the driving wheel (210) is coaxially mounted on an output shaft of the electric motor.

8. The method according to claim 7, wherein
the sensor (300) comprises a rotary type optical encoder or a rotary type electrical encoder, and
the driven wheel (310) is coaxially mounted on an input shaft of the encoder.

9. The method according to claim 8, wherein
an axis of the output shaft of the electric motor is arranged to be parallel to an axis of the input shaft of the encoder; and
an axis of the wire is arranged to be perpendicular to the axes of the output shaft of the electric motor and the input shaft of the encoder.

10. The method according to claim 9, wherein
the driver (200) and the sensor (300) are fixedly mounted on a vertical side wall (140) of an installation frame (100).

11. The method according to claim 10, wherein
an inlet tube (110) and an outlet tube (120) are mounted at a front end and a rear end of the installation frame (100), respectively;
a groove member (130) is mounted on the installation frame (100) between the inlet tube (110) and the outlet tube (120); and
the wire passes through the inlet tube (110), a groove formed in the groove member (130) and the outlet tube (120) as the wire is fed.

12. The method according to claim 11, wherein
at least a part of outer circumference surface of the wire emerges from both ends of the groove of the groove member (130); and
wherein outer circumference surfaces of the driving wheel (210) and the driven wheel (310) press against the emerged outer circumference surface of the wire so as to frictionally engage the wire.

13. A displacement sensing system for controlling a feeding length of a wire, comprising:
a displacement sensing device comprising a driven wheel (310) and a sensor (300) for sensing the number of revolutions of the driven wheel (310), the driven wheel (310) being frictionally engaged with the wire and configured to be rotated under a frictional engaging force therebetween as the wire is fed; and
a controller for calculating an actual feeding length of the wire based on a product of the number of revolutions of the driven wheel (310) sensed by the sensor (300) and a perimeter of the driven wheel (310).

14. The displacement sensing system according to claim 13, wherein
the sensor (300) comprises a rotary type optical encoder or a rotary type electrical encoder, and
the driven wheel (310) is coaxially mounted on an input shaft of the encoder.

15. A method for controlling a feeding length of a wire, comprising:
sensing an actual feeding length of the wire; and
controlling the feeding length of the wire based on an error between a predetermined feeding length of the wire and the sensed actual feeding length of the wire with closed loop feedback control until the error becomes zero or within an allowable range.
